# EUROPÄISCHE PATENTSCHRIFT

(11) **EP 1 211 903 B1**
(45) Veröffentlichungstag und Bekanntmachung des Hinweises auf die Patenterteilung: **29.09.2004**
(21) Anmeldenummer: 01125499.2
(22) Anmeldetag: 07.11.2001
(51) Int. Cl.: H04Q 7/20, H04L 12/28, H04L 12/18

(54) **Verfahren zur Funkübertragung von Dienstedaten zwischen einer Funkbake und einem mobilen elektronischen Informationsgerät mit Funkanschluss**
Method of transmission of service information between a radio beacon and a mobile information unit
Procédé de transmission de données de service entre une balise radio et un terminal d'information mobile

(30) Priorität: 13.11.2000 DE 10056204
(43) Veröffentlichungstag der Anmeldung: 05.06.2002
(73) Patentinhaber: Deutsches Zentrum für Luft- und Raumfahrt e.V., 51147 Köln (DE)
(72) Erfinder: Angermann, Michael, Dipl.-Ing., 82166 Gräfelfing (DE); Steingass, Alexander, Dipl.-Ing., 82205 Gilching (DE); Robertson, Patrick, Dr., 82541 Ammerland (DE)
(74) Vertreter: von Kirschbaum, Albrecht, Dipl.-Ing.

(56) Entgegenhaltungen:
- EP-A- 1 022 876
- EP-A- 1 024 628
- WO-A-00/28436
- WO-A-00/65497
- SCHEITER C ET AL: "VON JINI BIS INFERNO MIDDLEWARE SCHAFFT EIN EINHEITLICHES ANWENDUNGSSYSTEM FUER INHOUSE-TECHNIKEN" CT MAGAZIN FUER COMPUTER TECHNIK, VERLAG HEINZ HEISE GMBH., HANNOVER, DE, Nr. 15, 17. Juli 2000 (2000-07-17), Seiten 148-150,152-153, XP000932892 ISSN: 0724-8679

## Beschreibung

Die Erfindung betrifft ein Verfahren zur Funkübertragung von Dienstedaten zwischen einer Funkbake und einem mobilen elektronischen, mit Funkanschluss versehenen Informationsgerät, in welchem die empfangenen Daten ausgewertet werden, um Teilnehmern über die Funkbake den Zugang zu Informationen der Dienste zu ermöglichen, wobei die Dienste in einem Betriebssystem mit standardisierter Architektur realisiert sind, das auf einer plattformunabhängigen virtuellen Maschine laufen kann und das es ermöglicht, einen Anbieter von Diensten mit Teilnehmern über ein gemeinsames Netzwerk zu koppeln, und wobei die Daten der Dienste in einer ersten Stufe über eine unidirektionale Broadcast-Verbindung und danach in einer zweiten Stufe über eine bidirektionale Verbindung übertragen werden.

Werden Daten von Diensten, die in einer Architektur entsprechend JINI™ oder dergleichen realisiert sind und beispielsweise für ein Reiseplanungssystem vorgesehen sein können, drahtlos über Funk zwischen einer Funkbake und einem mobilen elektronischen Informationsgerät mit Funkanschluss, z.B. einem mit Funk-Sende/Empfänger ausgestatteten PDA (Personal Digital Assistant), übertragen, so ist es wichtig, dass das eingesetzte Übertragungsverfahren die zur Verfügung stehende Übertragungsbandbreite optimal nutzt.

Erfolgt die Übertragung der Daten dieser Dienste in Form einer unidirektionalen Broadcast-Übertragung von der Funkbake zum mobilen elektronischen Informationsgerät mit Funkanschluss hin, so tritt die Problematik auf, dass die Funkbake nie wissen kann, ob das funkbetriebene mobile elektronische Informationsgerät, also z.B. der PDA, die Sendung tatsächlich erhalten hat. Daher ist es unbedingt erforderlich, dass die Funkbake die Sendung der einzelnen Dienste stets wiederholt. Diese Wiederholungen schränken jedoch die Anzahl der ausgestrahlten Dienste ein, da für ein neu empfangendes mobiles elektronisches Informationsgerät die Wartezeit zu groß wird, bis es die Daten aller vorgesehenen Dienste über Funk empfangen hat.

EP-A-1 024 628 beschreibt ein Verfahren zum Auseinanderhalten von Diensten, die von einer Diensteversorgungseinrichtung in der Nähe eines Informationsgerätes angeboten werden, von solchen Diensten, die von einer nicht in der Nähe dieses Informationsgerätes befindlichen Diensteversorgungseinrichtung angeboten werden, wobei alle diese Einrichtungen einschließlich dem Informationsgerät Teile eines drahtlosen Lokalnetzes sind. Das Informationsgerät unterhält sowohl eine Aufzeichnung mit Informationen über Dienste und zugeordnete Kennzeichen als auch eine Kennzeichenliste über die Diensteversorgungseinrichtungen. Die zugeordneten Kennzeichen und die Kennzeichenliste werden verglichen, um einen zugeordneten Dienst als in der Nähe des Informationsgerätes befindlich zu ermitteln, wenn er. von einer Diensteversorgungseinrichtung gemacht wird, die in der Kennzeichenliste aufgelistet ist. Ein zugeordneter Dienst wird als nicht in der Nähe des Informationsgerätes befindlich ermittelt, wenn er von einer Diensteversorgungseinrichtung gemacht wird, die nicht in der Kennzeichenliste aufgeführt ist. Das Informationsgerät umfasst eine Netzwerkschnittstelle zur drahtlosen Kommunikation mit den Diensteversorgungseinrichtungen, die als Funkbaken realisiert werden können, und einen Diensteauffindungsmodul, der die Aufzeichnung mit den Diensten und zugeordneten Kennzeichen unterhält. Bei diesem bekannten Verfahren handelt es sich also um ein spezielles Dienste-Discovery-Verfahren, bei dem von Informationsgeräten solche Dienste ausfindig gemacht werden sollen, die jeweils in der Nähe der Geräte von anderen Geräten drahtlos angeboten werden. Dabei senden die Diensteversorgungseinrichtungen von Zeit zu Zeit zur Bekanntmachung des jeweiligen Dienstes Diensteinformationen aus, die von allen Informationsgeräten in der Nähe davon empfangen werden können, damit sie auf die angebotenen Dienste aufmerksam gemacht werden. Dieses System beruht auf Gegenseitigkeit, da es sich prinzipiell um bidirektionale drahtlose Verbindungen untereinander handelt, vor allem was die tatsächliche Abwicklung der Dienste selbst und der damit verbundenen Datenmengenübertragung angeht, wodurch bei der eigentlichen Dienstabwicklung die zur Verfügung stehende Übertragungabandbreite sehr rasch ausgenutzt ist.

In EP-A-1 024 628 wird auch die Aufteilung der Dienste in unterschiedliche Stufen erörtert, wobei in einer ersten Stufe ein Lokalisierungsdienst in Form einer Broadcast-Verbindung mit Hilfe einer eigens dafür vorgesehenen Funkbake vorgenommen wird und in einer oder mehreren Stufen zusätzlich die bidirektionalen Dienste abgewickelt werden.

Aufgabe der Erfindung ist es, ein Verfahren zu schaffen, mittels welchem sich Daten von Diensten, die in einem Betriebssystem mit einer standardisierten Architektur entsprechend JINI™ oder dergleichen realisiert sind, das es also ermöglicht, einen Anbieter von Diensten mit Teilnehmern über ein gemeinsames Netzwerk zu koppeln, drahtlos über Funk zwischen einer Funkbake und einem mobilen elektronischen Informätionsgerät mit Funkanschluss, z.B. einem mit Funk-Sende/Empfänger ausgestatteten PDA, übertragen lassen, so dass die zur Verfügung stehende Übertragungsbandbreite optimal genutzt wird und keine aus den vorher erwähnten Gründen die Anzahl der nutzbaren Dienste einschränkenden Wiederholungen von Aussendungen vorgenommen werden müssen.

Gemäß der Erfindung wird diese Aufgabe bei einem Verfahren der eingangs genannten Art dadurch gelöst, dass in der ersten Stufe in einer Broadcast-Zone über die Broadcast-Verbindung eine Grobrealisierung der Dienste übertragen wird, so dass der anwendende Teilnehmer eine Basisfunktionalität der Dienste nutzen kann, und dass in der zweiten Stufe in einer Zone, in der auch bidirektionaler Funkbetrieb möglich ist, vom Teilnehmer eine detailliertere Version dieser Dienste angefordert werden kann.

Der wesentliche Gedanke der Erfindung ist darin zu sehen, die Dienste in zwei Teile aufzuteilen. Der erste Teil kann dann über eine Broadcast-Verbindung gesendet werden und enthält eine Grobrealisierung der Dienste. Wird diese Grobrealisierung ausgeführt, so kann der anwendende Teilnehmer eine Basisfunktionalität der Dienste nutzen. Hierfür ist der Aufenthalt in der Zone ausreichend, in welcher der Teilnehmer unidirektionale Broadcast-Sendungen empfangen kann. Befindet er sich in der Zone, in der auch bidirektionaler Funkbetrieb möglich ist, so kann er dann in einem zweiten Schritt eine detailliertere Version dieser Dienste anfordern und so den vollen Detaillierungsgrad erreichen.

Die zusätzliche Aktivierung der Übertragung der Daten desjenigen Dienstes bzw. derjenigen Dienste, der/die eine größere Detaillierung aufweist/en, erfolgt in vorteilhafter Weise situationsabhängig, so dass eine Mehrfachübertragung der Daten desselben Dienstes vermieden wird.

Durch die Kombination von unidirektionaler Broadcast-Verbindung und bidirektionaler Funkverbindung zwischen einem mobilen elektronischen Informationsgerät mit Funkanschluss, z.B. einem mit Funk-Sende/Empfänger ausgestatteten PDA, und einer Funkbake kann die zur Verfügung stehende Bandbreite optimal genutzt werden. Das Verfahren nach der Erfindung weist darüber hinaus eine enorme Flexibilität auf. Sollen viele Dienste angeboten werden, so wird in vorteilhafter Weise die Detaillierung der Broadcast-Dienste gering gehalten und dafür eine höhere Detaillierung in den bidirektional über Funk übertragenen Diensten realisiert, und umgekehrt.

In der Ausführung kann das Verfahren nach der Erfindung beispielsweise für in JINI™ realisierte Dienste so gestaltet werden, daß eine Funkbake zunächst einen Dienst mit reduzierter Detaillierung broadcastet, der als solcher prinzipiell auch allein verwendet werden kann. Am Ende dieses Dienstes befindet sich ein Proxi, der bei Bestehen einer bidirektionalen Funkverbindung zwischen der Funkbake und dem mobilen elektronischen Informationsgerät mit Funkanschluß den detaillierten Dienst anfordert. Hierbei können die Standardschritte "Discover", "Look-up", "Join" und "Invoke" des JINI™-Protokolls durchlaufen werden.

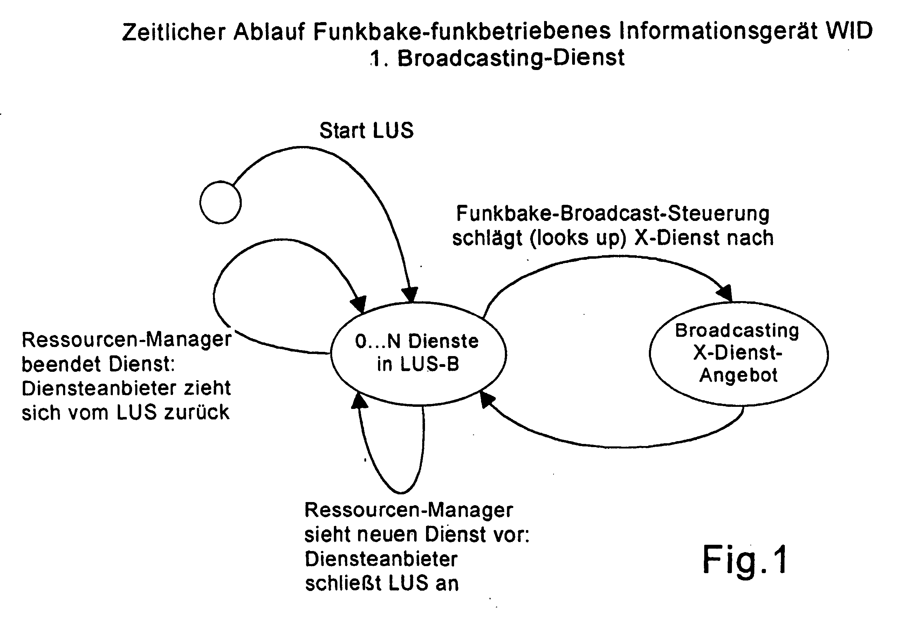

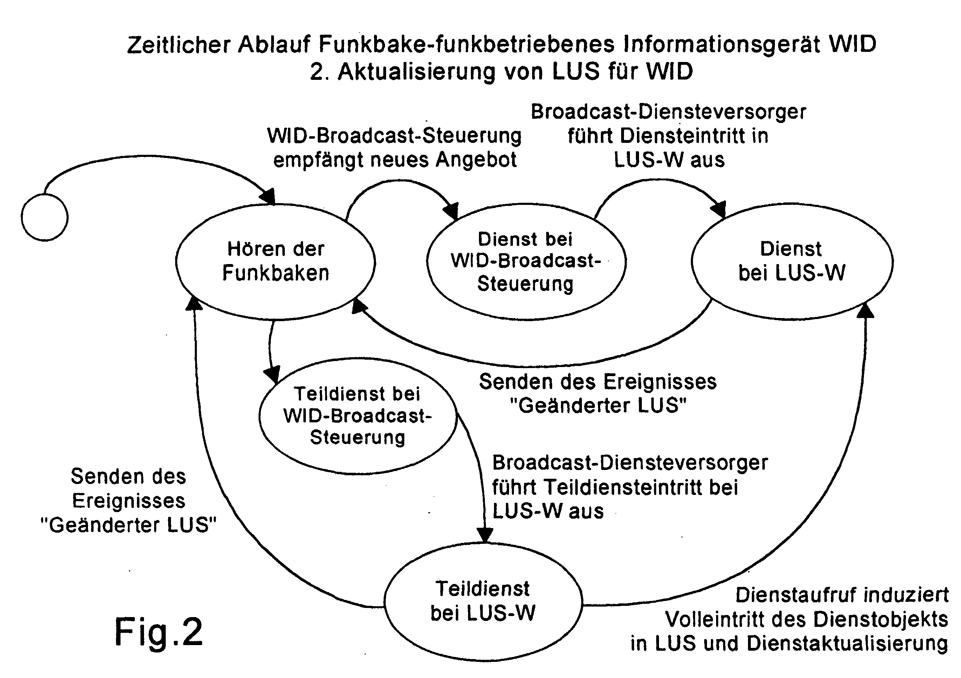

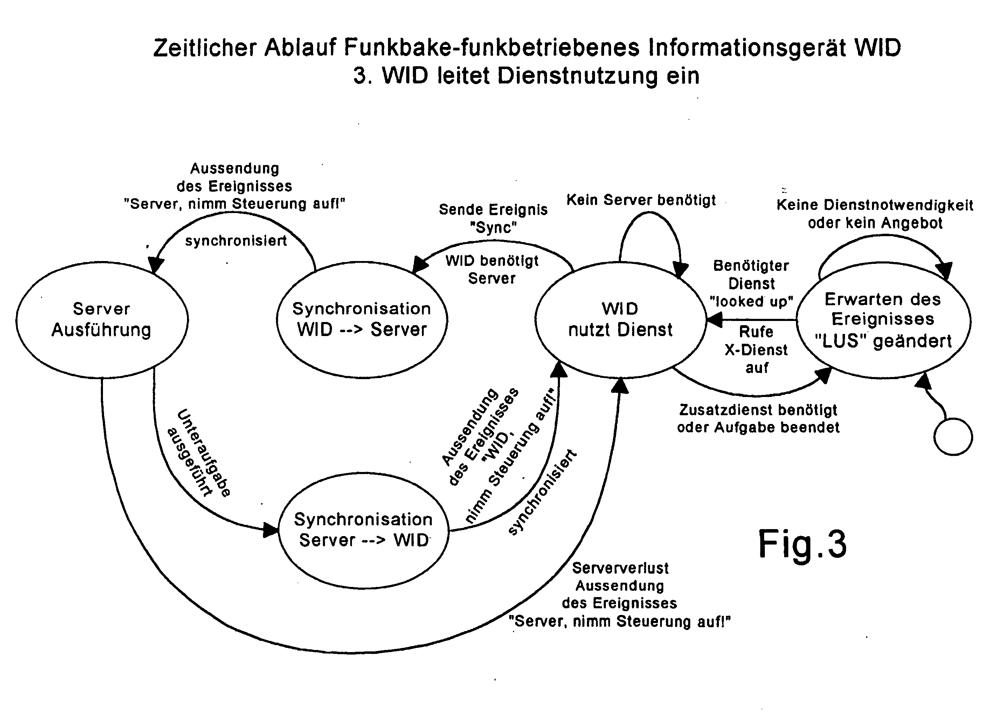

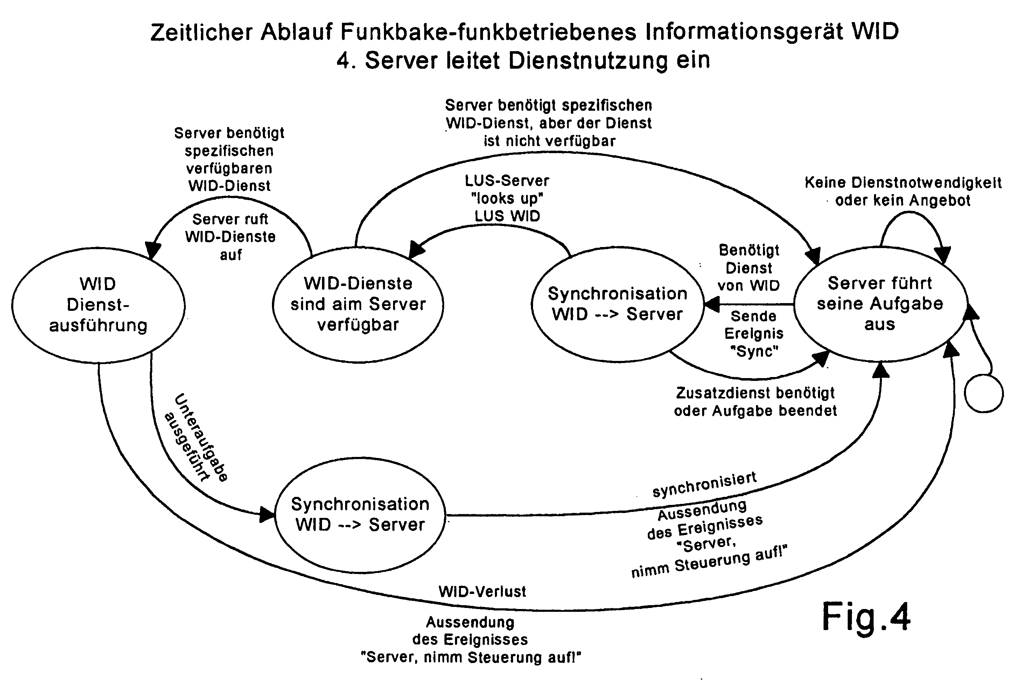

Fig.1 bis 4 zeigen in einem diesbezüglichen Beispiel einen genauen zeitlichen Ablauf bei der Durchführung des Verfahrens nach der Erfindung für ein Reiseplanungssystem und zwar im einzelnen:
- Fig.1: den zeitlichen Ablauf zwischen Funkbake und mobilem elektronischen Informationsgerät mit Funkanschluß WID beim Broadcasting-Dienst,
- Fig.2: den zeitlichen Ablauf zwischen Funkbake und mobilem elektronischen Informationsgerät mit Funkanschluß WID beim Aktualisieren des Look-up-Dienstes LUS im mobilen elektronischen Informationsgerät mit Funkanschluß WID,
- Fig.3: den zeitlichen Ablauf zwischen Funkbake und mobilem elektronischen Informationsgerät mit Funkanschluß WID bei der Einleitung der Dienstnutzung durch das mobile elektronische Informationsgerät mit Funkanschluß WID, und
- Fig.4: den zeitlichen Ablauf zwischen Funkbake und mobilem elektronischen Informationsgerät mit Funkanschluß WID bei der Einleitung der Dienstnutzung durch den Server.

Im Folgenden sind noch drei Beispiele zur Anwendung des Verfahrens nach der Erfindung angegeben.

Das erste Beispiel ist ein Navigationsdienst. Ein solcher Dienst soll es einem Teilnehmer, der mit einem mobilen elektronischen Funk-Informationsgerät ausgerüstet ist, ermöglichen, auch innerhalb von Gebäuden und Räumen (indoor) zu navigieren. Dabei kann folgendermaßen vorgegangen werden:
- Broadcasting:: Die Funkbake, die diesen Dienst broadcastet, bietet als "Primitivdienst" z.B. den topologischen Hinweis "Sie befinden sich im Flughafen München" an.
- Bidirektional:: Als detaillierter Dienst wäre hier z.B. die Versorgung des elektronischen Funk-Informationsgeräts mit einer Umgebungskarte zu sehen.

Das zweite Beispiel ist ein Restaurantdienst. Ein solcher Dienst soll es ermöglichen, daß Restaurants, wie z.B. McDonalds. Funkbaken betreiben können, die Teilnehmer, die mit einem mobilen elektronischen Funk-Informationsgerät ausgerüstet sind, nutzen können. Hierbei kann folgendermaßen vorgegangen werden:
- Broadcasting:: Eine Funkbake für diesen Dienst würde z.B. das Angebot "McDonalds Restaurant in Ihrer Nähe" broadcasten.
- Bidirektional:: Die detaillierte Version würde dann beispielsweise Bestellung, Bezahlung, Platzreservierung und dergleichen ermöglichen.

Das dritte Beispiel ist ein Bahnhofsdienst. Ein solcher Dienst soll es ermöglichen, daß Bahnhöfe Funkbaken betreiben können, die Teilnehmer, die mit einem mobilen elektronischen Funk-Informationsgerät ausgerüstet sind, nutzen können. Hierbei kann folgendermaßen vorgegangen werden:
- Broadcasting:: Der Broadcast-Dienst einer solchen Funkbake würde z.B. einen Dienst "Sie befinden sich im Hauptbahnhof München Gleis 9" broadcasten.
- Bidirektional:: Der detaillierte Dienst würde dann beispielsweise Fahrkartenverkäufe, Reservierungen und dergleichen ermöglichen.

## Patentansprüche

1. Verfahren zur Funkübertragung von Dienstedaten zwischen einer Funkbake und einem mobilen elektronischen, mit Funkanschluss versehenen Informationsgerät, in welchem die empfangenen Daten ausgewertet werden, um Teilnehmern über die Funkbake den Zugang zu Informationen der Dienste zu ermöglichen, wobei die Dienste in einem Betriebssystem mit standardisierter Architektur realisiert sind, das auf einer plattformunabhängigen virtuellen Maschine laufen kann und das es ermöglicht, einen Anbieter von Diensten mit Teilnehmern über ein gemeinsames Netzwerk zu koppeln, und wobei die Daten der Dienste in einer ersten Stufe über eine unidirektionale Broadcast-Verbindung und danach in einer zweiten Stufe über eine bidirektionale Verbindung übertragen werden, **dadurch gekennzeichnet, dass** in der ersten Stufe in einer Broadcast-Zone über die Broadcast-Verbindung eine Grobrealisierung der Dienste übertragen wird, so dass der anwendende Teilnehmer eine Basisfunktionalität der Dienste nutzen kann, und dass in der zweiten Stufe in einer Zone, in der auch bidirektionaler Funkbetrieb möglich ist, vom Teilnehmer eine detailliertere Version dieser Dienste angefordert werden kann.

2. Verfahren nach Anspruch 1, **dadurch gekennzeichnet, dass** die zusätzliche Aktivierung der Übertragung der Daten desjenigen Dienstes bzw. derjenigen Dienste, der/die eine größere Detaillierung aufweist/en, situationsabhängig erfolgt, so dass eine Mehrfachübertragung der Daten desselben Dienstes vermieden wird.

3. Verfahren nach Anspruch 1, **dadurch gekennzeichnet, dass** bei einem Angebot vieler Dienste die Detaillierung der über die Broadcast-Verbindung übertragenen Dienste gering gehalten und dafür eine höhere Detaillierung in den bidirektional über Funk übertragenen Diensten realisiert wird, und umgekehrt.

## Claims

1. A method of wireless communicating service data between a radio beacon and a mobile, electronic wireless information device in which the received data is analyzed for providing user access to service information via the radio beacon, the services being achieved in an operating system having a standardized architecture, the method capable of being run on a platform-independent virtual machine and coupling a server to users via a common network by the service data being communicated in a first phase via a one-way broadcast link and then in a second phase via a two-way link, **characterized in that** in the first phase a rough achievement of the services is communicated in a broadcasting zone via the broadcast link so that the user can use the basic functionality of the services and in the second phase a more detailed version of these services can be invoked by the user in a zone in which two-way wireless communication is possible.

2. The method as set forth in claim 1, **characterized in that** additionally activating the communication of data of the service(s) featuring more detail is done as a function of the situation in avoiding multiple communication of data of the same service.

3. The method as set forth in claim 1, **characterized in that** when many services are available, detailing the broadcasted services is minimized and detailing of the services wireless communicated two-way is higher, and vice-versa.

## Revendications

1. Procédé de radiotransmission de données de service entre une radiobalise et un dispositif d'information électronique mobile, pourvu d'une connexion radio, dans lequel les données reçues sont exploitées, pour permettre l'accès aux informations des services aux participants via la radiobalise, les services étant réalisés dans un système de fonctionnement avec une architecture standardisée, qui peut fonctionner sur une machine virtuelle indépendamment de la plate-forme et qui permet à un opérateur offrant des services de se coupler avec des participants via un réseau commun, et les données de services étant transmises dans une première étape via une connexion radio unidirectionnelle et ensuite dans une deuxième étape via une connexion bidirectionnelle, **caractérisé en ce que** l'on transmet dans la première étape dans une zone de transmission radio via la connexion radio une réalisation grossière des services, de manière à ce que les participants utilisateurs puissent utiliser une fonctionnalité de base des services, et **en ce que** dans la deuxième étape dans une zone, dans laquelle le fonctionnement radio bidirectionnel est aussi possible, les participants puissent demander une version plus détaillée de ces services.

2. Procédé selon la revendication 1, **caractérisé en ce que** l'activation additionnelle du transfert des données du service respectif ou des services respectifs, qui présente(nt) plus de détails, dépend de la situation, de manière à éviter un transfert multiple des données du même service.

3. Procédé selon la revendication 1, **caractérisé en ce que** dans le cas d'une offre de plusieurs services le détail des services transmis via la connexion radio est maintenu à un niveau faible et c'est pourquoi on réalise une présentation plus détaillée dans les services transférés par radio en mode bidirectionnel, et inversement.
